# EUROPEAN PATENT APPLICATION

(11) **EP 4 644 033 A1**
(43) Date of publication of application: **05.11.2025**
(21) Application number: 24852443.1
(22) Date of filing: 06.08.2024
(51) Int. Cl.: B23K 26/21, B23K 26/16, B08B 1/16, H01M 50/536

(54) **WELDING APPARATUS**

(30) Priority: 08.08.2023 KR 20230103487
(71) Applicant: LG Energy Solution, Ltd., Seoul 07335 (KR)
(72) Inventor: NA, Ki Beom, Daejeon 34122 (KR); LEE, Hyuk Soo, Daejeon 34122 (KR); PARK, Jung Hyun, Daejeon 34122 (KR); LEE, Won Jae, Daejeon 34122 (KR); SIM, Ah Jin, Daejeon 34122 (KR); PARK, Dong Hyeuk, Daejeon 34122 (KR); YANG, Gi, Daejeon 34122 (KR)
(74) Representative: Goddar, Heinz J.
(86) International application number: PCT/KR2024/095987
(87) International publication number: WO 2025/034090

(57) **Abstract**

A welding device according to one example of the present invention comprises a welding part including a lower jig having a seat part, wherein a welding target is seated thereon, opened toward the welding target, a lower elevating part provided to elevate the lower jig, and a laser irradiation part provided to irradiate the welding target with a laser beam, and a foreign material cleaning part including a scraper provided to be capable of entering the seat part after the lower jig is lowered.

## Description

### Technical Field

The present invention relates to a welding device, and specifically, relates to a laser welding device, which relates, particularly, to a welding device capable of automatically cleaning foreign materials attached to a welding mask.

This application claims the benefit of priority based on Korean Patent Application No. 10-2023-0103487 dated August 8, 2023, the disclosure of which is incorporated herein by reference in its entirety.

### Background Art

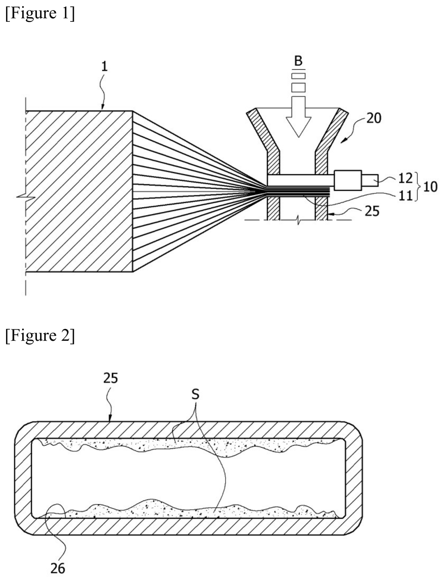

Figure 1 is a diagram for explaining a laser welding method of a welding target using a conventional laser welding device.

As shown in Figure 1, the laser welding device (20) comprises a welding mask (25). During laser welding, an electrode tab (11) and an electrode lead (12) of a secondary battery are disposed on the welding mask (25), and then a laser welding process is performed.

The electrode tab (11) is provided to protrude from an electrode assembly (1) for the secondary battery.

The electrode lead (12) is laminated on the electrode tab (11) so that a part overlaps the electrode tab (11) and the remaining part protrudes to one side of the electrode tab (11).

The welding mask (25) is disposed on the part where the electrode lead (12) overlaps the electrode tab (11). The laser welding device (20) irradiates the part where the electrode lead (12) overlaps the electrode tab (11) with a laser beam (B). The electrode lead (12) is weld-coupled to the electrode tab (11).

During laser welding, foreign materials (S), such as spatter, generated while the electrode lead (12) and the electrode tab (11) are melted, flow down to the welding mask (25), and simultaneously are attached to an inner periphery (26) of the welding mask (25).

Figure 2 is a schematic diagram for explaining a state where foreign materials generated during laser welding are attached to an inner periphery of a welding mask. As the number of welding increases, foreign materials (S) accumulate on the inner periphery (26) of the welding mask (25).

Such foreign materials (S) interfere with the laser beam (B) during laser welding. If the laser welding is repeated in a state where the foreign materials (S) are attached to the welding mask (25), there is a problem that a welding quality deteriorates. To solve such a problem, conventionally, the welding mask (25) is replaced periodically.

When the welding mask (25) is replaced, the laser welding device (20) stops its operation. Accordingly, the welding of the welding target (10) is stopped for the replacement time of the welding mask (25).

While the laser welding device (20) is stopped, a production loss of the welding target (10) occurs. Accordingly, a device capable of automatically cleaning the welding mask (25) without replacing the welding mask (25) is required.

### Disclosure

### Technical Problem

The present invention is intended to provide a welding device capable of automatically cleaning foreign materials attached to a lower mask in a welding standby mode without unmoving a welding part.

### Technical Solution

A welding device according to one example of the present invention comprises a welding part including a lower jig having a seat part, wherein a welding target is seated thereon, opened toward the welding target, a lower elevating part provided to elevate the lower jig, and a laser irradiation part provided to irradiate the welding target with a laser beam, and a foreign material cleaning part including a scraper provided to be capable of entering the seat part after the lower jig is lowered.

Also, the foreign material cleaning part may be provided so that the scraper reciprocates within the seat part along the longitudinal direction of the seat part.

In addition, the seat part may have a space part into which the scraper is inserted and a seating surface on which the welding target is seated, and the space part may be opened toward both ends in the longitudinal direction and the welding target, respectively. The seat part may have an inner periphery forming the space part.

Furthermore, the scraper may be disposed parallel to the longitudinal direction of the seat part.

Also, the scraper may have a length longer than the length of the seat part, and may be provided to be capable of contacting an inner periphery of the seat part when entering the seat part.

In addition, when the scraper enters the seat part, a part of the outer surface of the scraper may be in contact with an inner periphery of the seat part along the circumferential direction of the scraper, and a part of the outer surface of the scraper may be exposed to the upper portion of the seat part.

Furthermore, the foreign material cleaning part may comprise a cleaning drive part providing the scraper with drive force so that the scraper linearly reciprocates.

Also, the welding device may comprise a control part controlling operations of the welding part and the foreign material cleaning part.

In addition, the control part may be provided to perform a welding mode in which the welding part laser-welds the welding target, and a cleaning mode in which the foreign material cleaning part removes the foreign material from the seat part in a welding standby mode after completion of the welding mode.

Furthermore, the control part may be provided to perform the cleaning mode at a preset cycle.

Also, the lower jig may comprise a lower mask having a seat part and a suction passage connected to the seat part, and a jig seating part, wherein the lower mask and the foreign material cleaning part are mounted thereon, provided to be elevated by the lower elevating part.

In addition, the suction passage may be connected to be fluidly movable with the space part of the seat part.

Furthermore, the control part may be provided so that by raising the lower elevating part upon the welding mode, the lower mask moves toward a welding position, and the control part may be provided so that by lowering the lower elevating part upon the welding standby mode, the lower mask moves toward a lower standby position, which is below the welding position.

Also, the control part may operate the foreign material cleaning part so that the scraper of the foreign material cleaning part enters the seat part and reciprocates along the longitudinal direction of the seat part when the lower elevating part is lowered.

In addition, the control part may be provided to raise the lower elevating part after operating the foreign material cleaning part so that the scraper is separated from the seat part.

Furthermore, the welding part may comprise an upper jig having a beam opening provided to enable the laser beam to pass therethrough, wherein the beam opening is disposed to face the seat part, and provided to pressurize the welding target up and down together with the lower jig upon the welding mode.

Also, the welding part may comprise a suction part mounted on the lower jig to be fluidly movable with the seat part, and provided to suck smoke generated in the welding target upon the welding mode. The suction part may be connected to be fluidly movable with the suction passage.

In addition, the control part may be provided to operate the suction part in the cleaning mode.

### Advantageous Effects

As described above, the welding device related to at least one example of the present invention has the following effects.

The foreign material cleaning part may perform the cleaning mode in the welding standby mode to automatically clean foreign materials attached to the inner periphery of the lower mask. Accordingly, the present invention can improve the welding quality of the welding target by performing the welding mode after automatically cleaning the lower mask periodically.

Also, by performing the cleaning mode in which the foreign material cleaning part cleans the lower mask in the welding standby mode, the welding can be continuously performed on the welding target without unmoving the welding part.

In addition, by continuously performing the welding on the welding target without unmoving the welding part due to replacement of the lower mask, welding production of the welding target can be improved.

Furthermore, by automatically cleaning the foreign material cleaning part periodically, manpower and investment costs for replacing and cleaning the lower mask can be reduced.

### Description of Drawings

Figure 1 is a diagram for explaining a laser welding method of a welding target using a conventional laser welding device.
Figure 2 is a schematic diagram for explaining a state where foreign materials generated during laser welding are attached to an inner periphery of a welding mask.
Figure 3 is a configuration diagram of a welding device according to one example of the present invention.
Figure 4 is a perspective diagram showing a scraper, and a seat part of a lower jig.
Figure 5 is a schematic diagram showing a seat part of a lower jig.
Figures 6 to 8 are schematic diagrams showing various shapes of a scraper.
Figure 9 shows one operating state of a welding device upon a cleaning mode.
Figure 10 shows one operating state of a welding device upon a welding mode.

### Mode for Invention

Hereinafter, a welding device according to one example of the present invention will be described with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

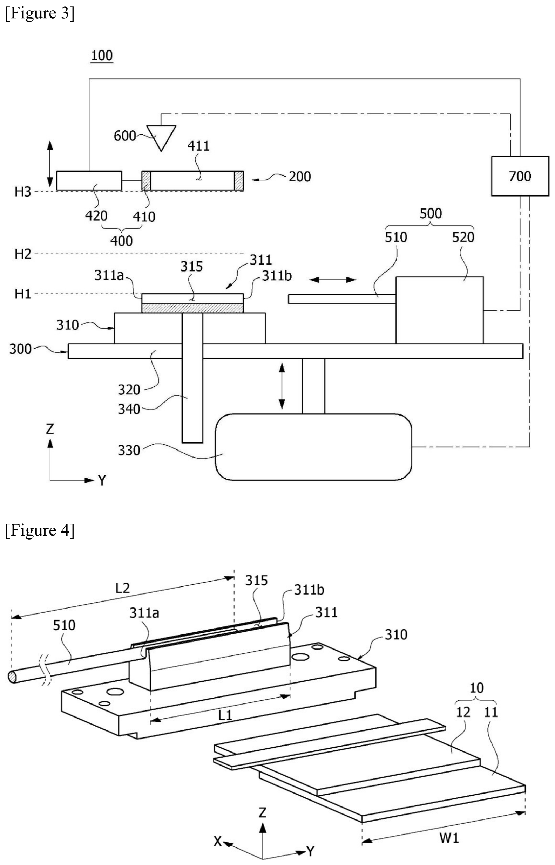

Figure 3 is a configuration diagram of a welding device (100) according to one example of the present invention, and Figure 4 is a perspective diagram showing a scraper (510) and a seat part (311) of a lower jig (310).

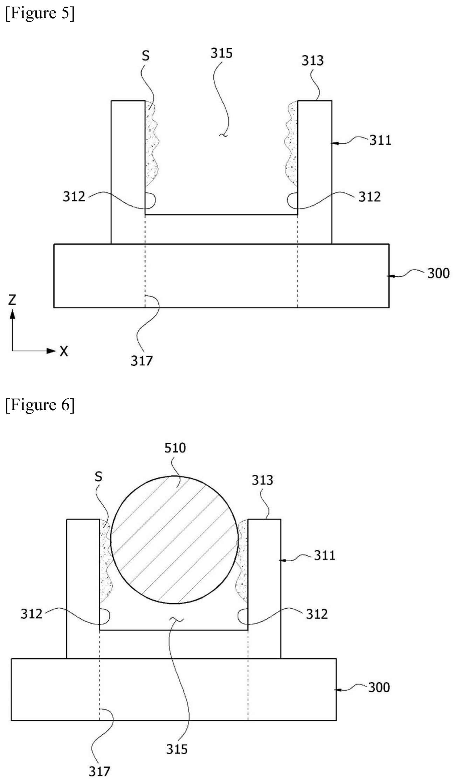

In addition, Figure 5 is a schematic diagram showing a seat part (311) of a lower jig, and Figures 6 to 8 are schematic diagrams showing various shapes of a scraper.

The welding device (100) according to one example of the present invention comprises a welding part (200) for laser-welding a welding target (10).

The welding part (200) comprises a lower jig (310) having a seat part (311), wherein a welding target (10) is seated thereon, opened toward the welding target (10), a lower elevating part (330) provided to elevate the lower jig (310), and a laser irradiation part (600) provided to irradiate the welding target with a laser beam.

In addition, the welding device (100) comprises a foreign material cleaning part (500) for removing foreign materials inside the seat part (311) of the lower jig (310).

The foreign material cleaning part (500) comprises a scraper (510) provided to be capable of entering the seat part (311) after the lower jig (310) is lowered.

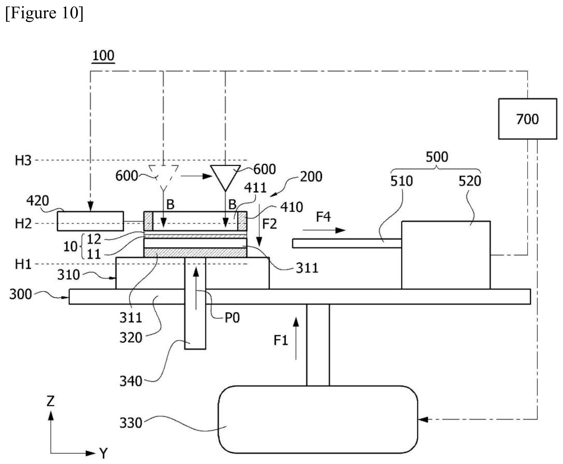

Also, the welding device (100) according to one example of the present invention may comprise a welding part (200) including a lower jig (300) having a seat part (311), wherein a welding target (10) is seated thereon, opened toward the welding target (10), a lower elevating part (330) provided to elevate the lower jig (300), and a laser irradiation part (600) provided to irradiate the welding target (10) with a laser beam (B, see Figure 10), and a foreign material cleaning part (500) including a scraper (510) provided to be capable of entering the seat part (311) after the lower jig (300) is lowered from the welding target (10).

In addition, the welding device (100) may comprise a control part (700) controlling operations of the welding part (200) and the foreign material cleaning part (500).

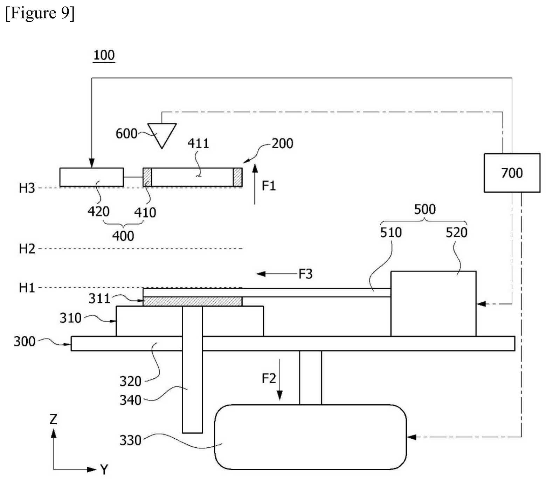

Figure 9 shows one operating state of a welding device upon a cleaning mode, and Figure 10 shows one operating state of a welding device upon a welding mode.

The welding device (100) comprises a welding part (200) provided to laser-weld a welding target (10) upon a welding mode. Referring to Figure 1, the welding target (10) may be an electrode tab (11) and an electrode lead (12) of an electrode assembly (1) in a secondary battery. In the welding mode, the electrode tab (11) and the electrode lead (12) may be welded.

The welding part (200) comprises a lower jig (300) having a seat part (311) with an open upper portion and positioned so that the lower surface of the welding target (10) covers the seat part (311) upon the welding mode.

The lower jig (300) comprises a lower mask (310) having a seat part (311). The lower mask (310) is a welding mask. The lower mask (310) may have a suction passage (317).

Upon the welding mode, the welding target (10) is seated on the seat part (311). The seat part (311) may have a space part (315) into which the scraper (510) may be inserted and a seating surface (313) on which the welding target (10) is mounted. The suction passage (317) may be connected to be fluidically movable with the space part (315) of the seat part (311).

Also, the space part (315) may be opened toward both ends (311a, 311b) in the longitudinal direction (L) and the welding target (10), respectively, and the seat part (311) may have an inner periphery (312) forming the space part (315). Upon the welding mode, the foreign material (S) may be attached to the inner periphery (312).

In addition, the lower mask (310) is provided of a material having excellent thermal conductivity and durability. As one example, the lower mask (310) may be made of beryllium copper, cemented carbide, or high-speed steel.

The lower mask (310) is provided so that the seat part (311) is opened to the upper portion. The seat part (111) is opened toward the welding target (10), and provided so that the bottom portion is fluidly moveable with the suction passage (317) and a suction part (340) to be described below.

Also, the seat part (311) is provided to have a width smaller than the width (W1) of the welding target (10) in the longitudinal direction (y) of the seat part. The length (L1) of the seat part (311) may be approximately 1mm to 3mm smaller than the width (W1) of the welding target (10). For example, the seat part (311) may have a length (L1) of approximately 2.5mm to 3mm.

In addition, the lower jig (300) may comprise a jig seating part (320) on which the lower mask (310) is mounted. On the jig seating part (320), the lower mask (310) and the foreign material cleaning part (500) may be disposed to be spaced apart from each other in the longitudinal direction (y) of the seat part (311).

Furthermore, the lower jig (300) may comprise a lower elevating part (330) mounted on the jig seating part (320). The lower elevating part (330) may be provided to elevate the jig seating part (320) in the height direction (z) perpendicular to the longitudinal direction (y) of the seat part. In such a structure, when the jig seating part (320) rises, the lower mask (310) and the foreign material cleaning part (500) rise together, and when the jig seating part (320) descends, the lower mask (310) and the foreign material cleaning part (500) descend together.

The foreign material cleaning part (500) may be provided to enter the seat part (311) after the lower jig (300) is lowered from the welding target (10), thereby removing the foreign material (S) of the seat part (311).

In addition, the foreign material cleaning part (500) comprises a scraper (510) provided to be capable of entering the seat part (311). The scraper (510) is disposed parallel to the longitudinal direction (y) of the seat part.

The scraper (510) is provided to scrape off foreign materials (S) existing on the inner periphery (312) of the space part (315) of the seat part (311) using physical frictional force. The foreign material (S) may be spatter, and the like generated upon the welding mode. The scraper (510) may be made of a metal material, and may have a bar shape.

The scraper (510) may be provided to enter the seat part (311) such that a part of the outer surface of the scraper (510) is contactable with the inner periphery (312) of the seat part (311) in the circumferential direction of the scraper (510), and a part of the outer surface of the scraper (510) is exposed to the upper portion of the seat part (311).

Referring to Figure 4, the scraper (510) may have a length (L2) longer than the length (L1) of the seat part (311). Alternatively, the scraper (510) may be provided shorter than the length (L1) of the seat part (311). However, when the scraper (510) is shorter than the length (L1) of the seat part (311), a drive shaft of the cleaning drive part (520) connected to the scraper (510) may be provided to be capable of entering the seat part (311) together with the scraper (510).

Referring to Figures 5 to 8, the scraper (510) may have a cross-section which is contactable with the inner periphery (312) of the seat part (311) in the width direction (x) of the seat part (311).

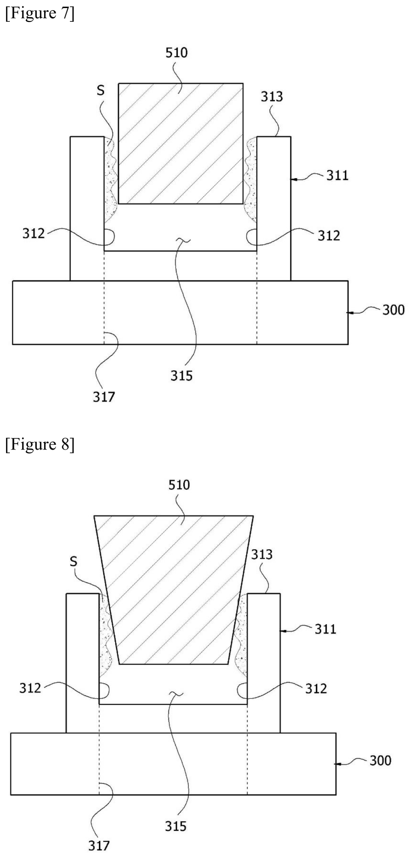

As one example, the scraper (510) may be provided in a columnar shape having a circular cross-section (see Figure 6), a quadrangular cross-section (see Figure 7), or a trapezoidal cross-section (see Figure 8).

Referring to Figure 8, when the scraper (510) has a trapezoidal cross-section, the scraper (510) may also be disposed so that its short side is positioned within the seat part (311) upon entering the seat part (311), and its long side parallel to the short side is exposed to the outside of the seat part (311).

The foreign material cleaning part (500) may comprise a cleaning drive part (520) providing the scraper (510) with drive force so that the scraper (510) linearly reciprocates.

The cleaning drive part (520) operates the scraper (510) so that the scraper (510) reciprocates in the longitudinal direction (y) of the seat part within the seat part (311) upon the cleaning mode. The cleaning drive part (520) may be a motor or a hydraulic cylinder.

In addition, upon operation of the cleaning drive part (520), the scraper (510) scrapes off the foreign material (S) existing on the inner periphery (312) of the seat part (311) and/or the boundary between the seating surface (313) and the inner periphery (312) while reciprocating in the longitudinal direction (y) of the seat part (311).

Here, the seating surface (313) is a portion where it extends to the upper portion of the inner periphery (312) and the welding target (10) is seated thereon.

As described above, the welding device (100) may comprise a control part (700) controlling operations of the welding part (200) and the foreign material cleaning part (500).

The control part (700) may be provided to perform a welding mode in which the welding part (200) laser-welds the welding target, and a cleaning mode in which the foreign material cleaning part (500) removes the foreign material from the seat part in a welding standby mode after completion of the welding mode.

The control part (700) performs a cleaning mode in which the foreign material cleaning part (500) removes the foreign material from the seat part (311) in a welding standby mode after completion of the welding mode.

Referring to Figure 9, the control part (700) lowers the lower elevating part (330) upon the welding standby mode.

Upon the lowering operation of the lower elevating part (330), the jig seating part (320) moves downward in the height direction (z). The lower elevating part (330) stops operating when the lower mask (310) is positioned at a lower standby position (H1). The lower standby position (H1) is a position spaced below the welding position (H2).

The control part (700) allows the foreign material cleaning part (500) to perform the cleaning mode at a preset cycle upon the lowering operation of the lower elevating part (330).

Upon the cleaning mode, the foreign material cleaning part (500) allows the scraper (510) to enter the seat part (311), thereby reciprocating in the longitudinal direction (y) of the seat part (311). In this instance, the scraper (510) reciprocates between one end (311a) of the seat part (311) and the other end (311b) of the seat part (311) in the longitudinal direction (y) of the seat part (311). The scraper (510) physically scrapes off the foreign material (S) from the inner periphery (312) of the seat part (311) while reciprocating.

The foreign material cleaning part (500) may perform the cleaning mode in the welding standby mode, thereby automatically cleaning the lower mask (310) without replacing the lower mask (310).

In addition, the control part (700) operates the welding part (200) upon the welding mode. Upon the welding mode, the welding part (200) laser-welds the welding target (10).

Meanwhile, after completion of the cleaning mode and before the welding mode, the control part (700) may be provided to raise the lower elevating part (330) after operating the foreign material cleaning part (500) so that the scraper (510) is separated from the seat part (311). In this instance, the scraper (510) is separated from the seat part (311) while moving backward in a direction away from the seat part (311).

Meanwhile, the welding part (200) may comprise an upper jig (400) provided to pressurize the welding target (10) up and down together with the lower jig (300) upon the welding mode, and a suction part (340) provided to suck smoke generated upon the welding mode.

Also, the upper jig (400) comprises an upper mask (410) having a beam opening (411) provided to enable the laser beam (B) to pass therethrough. The upper mask (410) is a welding mask. The upper mask (410) is provided of a material having excellent thermal conductivity and durability.

In addition, the upper mask (410) is positioned at the upper portion of the lower mask (310) so that the beam opening (411) faces the seat part (311). Furthermore, the upper mask (410) is disposed to be spaced apart from the lower mask (310) up and down with the welding target (10) interposed therebetween. The upper mask (410) is provided to be capable of contacting the upper surface of the welding target (10) at the welding position (H2) upon the welding mode.

Also, the upper jig (400) further comprises an upper elevating part (420) provided to elevate the upper mask (410) in the height direction (z).

The control part (700) operates the upper elevating part (420) downwardly so that the upper mask (410) is positioned at the welding position (H2) upon the welding mode. In addition, the upper mask (410) moves from the upper standby position (H3) to the welding position (H2).

In addition, the control part (700) operates the lower elevating part (520) upwardly so that the lower mask (310) is positioned at the welding position (H2). In this instance, the lower mask (310) moves from the lower standby position (H1) to the welding position (H2).

Furthermore, upon the upward operation of the lower elevating part (330), the jig seating part (320) moves upward in the height direction (z). The lower elevating part (330) stops operating when the lower mask (310) is positioned at the welding position (H2).

Also, the control part (700) allows the upper mask (410) and the lower mask (310) to pressurize the welding target (10) up and down at the welding position (H2). In addition, the control part (700) operates the laser irradiation part (600) and the suction part (340) upon the welding mode.

Upon the welding mode, the laser irradiation part (600) irradiates the welding target (10) with the laser beam (B) through the beam opening (411). The laser irradiation part (600) irradiates the welding target (10) with the laser beam (B) while moving in the longitudinal direction (y) of the seat part.

In addition, the suction part (340) sucks smoke generated from the welding target (10) upon the welding mode. The suction part (340) is mounted on the lower jig (300) to be fluidly movable with the seat part (311). The suction part (340) applies vacuum pressure (P0) to the inside of the suction passage (317) upon the welding mode.

Meanwhile, the control part (700) operates the suction part (340) in the cleaning mode. The suction part (340) is provided to suck foreign materials (S) upon the cleaning mode.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the welding device related to at least one example of the present invention, it is possible to perform the cleaning mode in which the foreign material cleaning part cleans the lower mask in the welding standby mode.

## Claims

1. A welding device comprising:
a welding part including a lower jig having a seat part, wherein a welding target is seated thereon, opened toward the welding target, a lower elevating part provided to elevate the lower jig, and a laser irradiation part provided to irradiate the welding target with a laser beam; and
a foreign material cleaning part including a scraper provided to be capable of entering the seat part after the lower jig is lowered.

2. The welding device according to claim 1, wherein
the foreign material cleaning part is provided so that the scraper reciprocates within the seat part along the longitudinal direction of the seat part.

3. The welding device according to claim 2, wherein
the seat part has a space part into which the scraper is inserted and a seating surface on which the welding target is seated, and
the space part is opened toward both ends in the longitudinal direction and the welding target, respectively.

4. The welding device according to claim 2, wherein
the scraper is disposed parallel to the longitudinal direction of the seat part.

5. The welding device according to claim 3, wherein
the scraper has a length longer than the length of the seat part, and is provided to be capable of contacting an inner periphery of the seat part when entering the seat part.

6. The welding device according to claim 2, wherein
when the scraper enters the seat part, a part of the outer surface of the scraper is in contact with an inner periphery of the seat part along the circumferential direction of the scraper, and a part of the outer surface of the scraper is exposed to the upper portion of the seat part.

7. The welding device according to claim 1, wherein
the foreign material cleaning part further comprises a cleaning drive part providing the scraper with drive force so that the scraper linearly reciprocates.

8. The welding device according to claim 1, further comprising
a control part controlling operations of the welding part and the foreign material cleaning part, wherein
the control part performs a welding mode in which the welding part laser-welds the welding target, and a cleaning mode in which the foreign material cleaning part removes the foreign material from the seat part in a welding standby mode after completion of the welding mode.

9. The welding device according to claim 8, wherein
the control part is provided to perform the cleaning mode at a preset cycle.

10. The welding device according to claim 8, wherein
the lower jig further comprises a lower mask having a seat part and a suction passage connected to the seat part, and a jig seating part, wherein the lower mask and the foreign material cleaning part are mounted thereon, provided to be elevated by the lower elevating part,
the control part raises the lower elevating part upon the welding mode, whereby the lower mask moves toward a welding position, and
the control part lowers the lower elevating part upon the welding standby mode, whereby the lower mask moves toward a lower standby position, which is below the welding position.

11. The welding device according to claim 10, wherein
the control part operates the foreign material cleaning part so that the scraper of the foreign material cleaning part enters the seat part and reciprocates along the longitudinal direction of the seat part when the lower elevating part is lowered.

12. The welding device according to claim 11, wherein
the control part is provided to raise the lower elevating part after operating the foreign material cleaning part so that the scraper is separated from the seat part.

13. The welding device according to claim 8, wherein the welding part
further comprises: an upper jig having a beam opening provided to enable the laser beam to pass therethrough, wherein the beam opening is disposed to face the seat part, and provided to pressurize the welding target up and down together with the lower jig upon the welding mode; and
a suction part mounted on the lower jig to be fluidly movable with the seat part, and provided to suck smoke generated in the welding target upon the welding mode.

14. The welding device according to claim 13, wherein
the control part is provided to operate the suction part in the cleaning mode.
